# EUROPÄISCHE PATENTSCHRIFT

(11) **EP 1 832 371 B1**
(45) Veröffentlichungstag und Bekanntmachung des Hinweises auf die Patenterteilung: **04.10.2017**
(21) Anmeldenummer: 06026715.0
(22) Anmeldetag: 22.12.2006
(51) Int. Cl.: B23G 7/02, B23G 5/06

(54) **Kombinationswerkzeug mit Stirnaussparung**
Combination tool with front notch
Outil de combinaison doté d'un évidement frontal

(30) Priorität: 06.03.2006 DE 102006010651
(43) Veröffentlichungstag der Anmeldung: 12.09.2007
(73) Patentinhaber: EMUGE-Werk Richard Glimpel GmbH & Co.KG Fabrik für Präzisionswerkzeuge, 91207 Lauf (DE)
(72) Erfinder: Glimpel, Helmut, Dipl.-Ing., 91207 Lauf (DE); Hechtle, Dietmar, Dipl.-Ing., 91257 Pegnitz (DE)
(74) Vertreter: Schröer, Gernot H.

(56) Entgegenhaltungen:
- EP-A1- 0 072 280
- EP-A1- 1 669 149
- WO-A1-95/18693
- DE-A1-102005 019 426
- DE-C- 715 580
- JP-A- 2000 198 026

## Beschreibung

Die Erfindung betrifft ein Werkzeug zur Erzeugung eines Gewindes, insbesondere eines Innengewindes.

Zur Gewindeerzeugung, insbesondere zur Erzeugung von Gewinden für Schraubverbindungen, sind spanend arbeitende Werkzeuge und spanlos arbeitende Werkzeuge bekannt.

Spanend arbeitende Werkzeuge weisen Schneiden auf. Zu dieser Gruppe zählen beispielsweise Bohrer, die insbesondere mit kontinuierlichem Schnitt oder kontinuierlichem Eingriff der Schneiden ins Material ein Werkstück bearbeiten, und Fräser, die insbesondere mit diskontinuierlichem oder unterbrochenem Schnitt oder mit diskontinuierlichem Eingriff der Schneiden ins Material das Werkstücks bearbeiten.

Zur spanlosen (oder: formenden) Gewindeerzeugung sind Gewindeerzeugungswerkzeuge bekannt, die auf einer Umformung des Werkstücks beruhen und durch Druck in dem Werkstück das Gewinde erzeugen. Unter diese spanlosen Gewindeerzeuger fallen die sogenannten Gewindefurcher, bei denen nach außen ragende Drückstollen (oder: Formkeile) zur Umformung des Materials des Werkstücks eingesetzt werden.

Die Werkzeuge weisen üblicherweise einen Werkzeugschaft und einen an diesem ausgebildeten Arbeitsbereich auf. Der Werkzeugschaft ist in der Regel wenigstens annähernd zylindrisch ausgeführt und mit seinem vom Werkstück abgewandten Ende im Spannfutter einer Gewindeerzeugungseinrichtung aufgenommen und gehalten. Der Arbeitsbereich weist die für die Gewindeerzeugung bzw. -nachbearbeitung vorgesehenen spanenden oder nichtspanenden Vorrichtungen auf, beispielsweise Schneiden oder Drückstollen.

Zur Erzeugung eines Gewindes in einer bereits vorhandenen Bohrung wird das Werkzeug mit dem Arbeitsbereich voran mit einem entsprechenden Vorschub axial zur Längsachse des Werkzeugschafts und unter Drehung um diese Längsachse in das Werkstück bzw. eine Bohrung im Werkstück eingeführt. Dabei werden die Schneiden bzw. Drückstollen in die Oberfläche des Werkstücks bzw. der Bohrung gedrückt. Die spanenden Einrichtrungen (Schneiden) tragen dabei Material (Werkstoff) ab, die nichtspanenden Einrichtungen (Drückstollen) drücken das Material des Werkstücks vorwiegend radial, also senkrecht zur Längsachse der Bohrung bzw. zur Werkzeugachse, weg. In letzterem Fall wird ein Teil des so verformten Materials verfestigt, ein anderer Teil in die Vertiefungen bzw. Rillen zwischen den Drückstollen des Gewindefurchers gedrängt, wodurch schließlich ein Gewinde im Werkstück erzeugt wird.

Sowohl spanabhebende als auch formende Arbeitsbereiche können speziell ausgebildet sein für eine rein axiale Werkstückbearbeitung, das heißt der jeweilige Arbeitsbereich bzw. das Werkzeug wird lediglich um die Werkzeugachse rotiert und mit axialem Vorschub in das Werkstück bewegt. Ferner können sowohl spanabhebende als auch formende Arbeitsbereiche speziell für eine zirkulare Werkstückbearbeitung ausgebildet sein, das heißt neben der Rotation um die Werkzeugachse und dem Vorschub in das Werkstück wird der jeweilige Arbeitsbereich bzw. das Werkzeug auch noch zirkular um eine parallel zur Werkzeugachse verlaufende und gegenüber der Werkzeugachse versetzte weitere Achse rotiert. Neben der Eigenrotation führt das Werkzeug demnach eine spiralförmige Bewegung in das Werkstück hinein aus.

Für eine rein axiale Bearbeitung sind die schneidenden bzw. formenden Einrichtungen üblicherweise zumindest im Wesentlichen spiralförmige um die Werkzeugachse umlaufend am Werkzeug angeordnet, das heißt mit Steigung entlang der Werkzeugachse. Diese Anordnung stellt letztendlich die Gegenform des zu erzeugenden Gewindes dar, die Steigung der Anordnung entspricht der Gewindesteigung. Für eine zirkulare Bearbeitung hingegen erfolgt die Anordnung üblicherweise ringförmig, das heißt steigungslos.

Der Vorteil der spanlosen Werkzeuge ist, dass durch die Verformung der Oberfläche und die damit verbundene Verfestigung die Härte des Werkstoffs im Bereich des Gewindeprofils ansteigt und somit ein verschleißfesteres Gewinde erzeugt wird. Nachteilig bei einer rein spanlosen Gewindeerzeugung, das heißt bei einer Gewindeerzeugung, bei der das Gewinde vollständig durch Furchen oder Formen mittels der Drückstollen ausgebildet wird, ist jedoch die großen Belastungen und der damit verbundene hohe Verschleiß der Drückstollen.

Um diese Belastung zu reduzieren, ist es daher bekannt, das Gewinde in einem vorgeschalteten Arbeitsgang vorzuerzeugen. Die Vorerzeugung des Gewindes kann mit einem spanabhebenden Werkzeug erfolgen, so dass sich bei diesem zweistufigen Verfahren zur Gewindeerzeugung die Vorteile spanabhebender und spanloser Gewindeerzeugung kombinieren lassen. Hierbei sind jedoch zumindest zwei getrennte Arbeitsvorgänge mit unterschiedlichen Werkzeugen erforderlich.

Ferner ist aus DE 10 2005 022 503 A1, das als nächstliegender Stand der Technik gegenüber dem Gegenstand des Anspruchs 1 darstellt, ein Kombinationswerkzeuge bekannt, das sowohl spanabhebend als auch spanlos arbeitet und dazu wenigstens einen spanabhebenden Bereich mit wenigstens einer Schneide und wenigstens einen Gewindeformbereich aufweist. Mit einem derartigen Werkzeug lässt sich die kombinierte, das heißt sowohl spanende als auch formende Gewindeerzeugung mit einem einzigen Werkzeug in einem Arbeitsgang zeit- und kostensparend durchführen. Nachteilig ist hierbei jedoch, dass vom spanabhebenden Bereich erzeugte Werkstückspäne vom nachfolgenden Gewindeformbereich in das Gewinde hineingedrückt werden können, was zu unerwünschten Fehlstellen im Gewinde führen kann.

Ein weiteres Werkzeug zur Gewindeerzeugung ist aus EP 0 072 280 A1 bekannt.

Zum Stand der Technik wird ferner verwiesen auf die Druckschrift DE 715 580 C, welche einen Gewindebohrer offenbart.

Es ist nun Aufgabe der Erfindung, ein neues Werkzeug zur Erzeugung eines Gewindes, insbesondere zur Erzeugung eines Innengewindes, anzugeben, bei dem die vorgenannten Nachteile überwunden oder zumindest verringert sind.

Diese Aufgabe wird mit den Merkmalen des Patentanspruchs 1 gelöst. Vorteilhafte Ausgestaltungen und Weiterbildungen des Werkzeugs gemäß der Erfindung ergeben sich aus den von Anspruch 1 abhängigen Ansprüchen.

Gemäß der Erfindung umfasst das Werkzeug zur Erzeugung eines Gewindes, insbesondere eines Innengewindes,
wenigstens einen spanabhebenden Bereich mit wenigstens einer Schneide, wobei der wenigstens eine spanabhebende Bereich zum Erzeugen einer Werkstückoberfläche für das Gewinde und/oder zum spanenden Erzeugen eines Vorgewindes in der bzw. einer Werkstückoberfläche ausgebildet und/oder vorgesehen ist,
wenigstens einen Gewindeformbereich,
wobei der wenigstens eine Gewindeformbereich zum spanlosen Erzeugen des Gewindes oder zum spanlosen Nach- oder Fertigbearbeiten des Vorgewindes jeweils durch Eindrücken oder Einformen in die Werkstückoberfläche ausgebildet und/oder vorgesehen ist,.

Es handelt sich somit um ein Kombinationswerkzeug. Bei diesem Werkzeug sind der bzw. die spanabhebende(n) Bereich(e) und der bzw. die Gewindeformbereich(e) so miteinander gekoppelt oder verbunden, dass sie gemeinsam um eine Werkzeugachse drehbar oder drehend sind,
ist mindestens ein spanabhebender Bereich wenigstens teilweise an einem stirnseitigen (freien) Werkzeugende und/oder angrenzend an ein stirnseitiges (freies) Werkzeugende ausgebildet, und
ist am stirnseitigen Werkzeugende eine Stirnaussparung (oder: Stirnausnehmung) ausgebildet, die für die Aufnahme von Spänen bestimmt ist.

Die Erfindung sieht vor, dass die Querschnittsfläche der Stirnaussparung mit zunehmendem Abstand vom stirnseitigen Werkzeugende abnimmt. Ferner sieht die Erfindung vor, dass das Werkzeug als Werkzeug mit Nuten und/oder Kanälen und/oder Durchbrechungen zur Führung der abgehobenen Späne ausgebildet ist, wobei die Nuten und/oder Kanäle und/oder Durchbrechungen im spanabhebenden Bereich und/oder im Gewindeformbereich verlaufen und/oder münden.

Üblicherweise ist für das Werkzeug, insbesondere dessen wenigstens einen spanabhebenden Bereich oder die Anordnung von dessen wenigstens einer Schneide und dessen wenigstens einen Gewindeformbereich, eine vorgegebene Vorschubrichtung axial zur Werkzeugachse ausgezeichnet. In der Regel bewegt sich das stirnseitige (freie) Werkzeugende in diese Vorschubrichtung, das heißt das stirnseitige (freie) Werkzeugende ist das Ende des Werkzeugs in einer vorgegebenen Vorschubrichtung des Werkzeugs. Das gegenüberliegende Ende ist üblicherweise in einer Spannvorrichtung einer Werkzeugmaschine eingespannt.

Bei den Spänen, für deren Aufnahme die Stirnaussparung bestimmt ist, handelt es sich um Werkstückspäne (auch: Werkstückspäne), die bei der spanenden Werkstückbearbeitung durch den spanabhebenden Bereich (bzw. dessen Schneiden) entstehen.

Die Vorteile des Werkzeugs nach der Erfindung liegen insbesondere darin, dass sich die bei der spanabhebenden Werkstückbearbeitung durch den spanabhebenden Bereich entstehenden Späne in der Stirnaussparung sammeln können und damit nicht mehr in den Gewindeformbereich gelangen und somit dort beim Formen auch nicht mehr in das Gewinde hineingedrückt werden können. Ferner weist dieses Werkzeug auch alle vorbeschriebenen Vorteile einer kombinierten Gewindeerzeugung durch spanende und formende Arbeitsschritte sowie die beschriebenen Vorteile eines Kombinationswerkzeuges auf.

Bei dem Werkzeug ist im Allgemeinen eine Drehrichtung oder ein Drehsinn ausgezeichnet, in dem das Werkzeug betrieben wird oder für den wenigstens ein spanabhebender Bereich oder die Anordnung von dessen wenigstens einer Schneide ausgelegt ist. Der wenigstens eine Gewindeformbereich arbeitet ebenfalls bei diesem Drehsinn.

Nach einer bevorzugten Weiterbildung erstreckt sich die Stirnaussparung ausgehend vom stirnseitigen Werkzeugende entlang der Werkzeugachse und/oder entgegen der Vorschubrichtung des Werkzeugs in das Werkzeug hinein.

In einer Ausführungsvariante erstreckt die Stirnaussparung sich ausgehend vom stirnseitigen Werkzeugende im Wesentlichen kegelstumpfförmig oder zylinderförmig in das Werkzeug hinein.

Eine weitere Ausführungsform sieht vor, dass die Querschnittsfläche der Stirnaussparung senkrecht zur Werkzeugachse zumindest am stirnseitigen Werkzeugende mindestens 30 Prozent der Werkzeugquerschnittsfläche einnimmt, insbesondere mindestens 50 Prozent, vorzugsweise mindestens 70 Prozent.

In einer zweckmäßigen Variante erstreckt sich die Stirnaussparung tiefer als eine an das stirnseitige Werkzeugende angrenzende Schneide und/oder Schneidenreihe des spanabhebenden Bereichs in das Werkzeug hinein, insbesondere tiefer als die halbe Länge des an das stirnseitige Werkzeugende angrenzenden spanabhebenden Bereichs. Dadurch ist in der Stirnaussparung ausreichend Platz für die aufzunehmenden Späne.

Zweckmäßig ist auch, wenn die Stirnaussparung in der Mitte des stirnseitigen Werkzeugendes ausgebildet und/oder radial von einem Mantel umgeben ist. Gemäß einer bevorzugten und besonders zweckmäßigen Weiterbildung weist der die Stirnaussparung radial umgebende Mantel eine oder mehrere Durchbrechungen auf, die den Eintritt von Spänen in die Stirnaussparung ermöglichen. Diese Durchbrechungen entsprechen in ihrer Grundfunktion den Nuten bei herkömmlichen spanabhebenden Werkzeugen, das heißt sie dienen der Spanabfuhr. Allerdings werden die Späne über die Durchbrechungen der Stirnaussparung zugeführt und nicht - wie bei den Nuten herkömmlicher Werkzeuge - an den rückwärtigen Teil des Werkzeugs geleitet. Zweckmäßig ist dabei auch, wenn die Durchbrechungen den Schneiden des spanabhebenden Bereichs in deren Schnittrichtung vorausgehen.

Nach einer Ausführungsvariante erstrecken sich die Durchbrechungen ausgehend vom stirnseitigen Werkzeugende entlang des Werkzeugs. Auch können die Durchbrechungen parallel zur Schneidenanordnung längs des Werkzeugs erstreckt sein.

Alternativ oder additiv kann vorgesehen sein, dass sich die Durchbrechungen geradlinig, insbesondere parallel zur Werkzeugachse, vorzugsweise schräg oder spiralförmig um die Werkzeugachse gewunden erstrecken.

Mit dem erfindungsgemäßen Werkzeug ist ein Erzeugen eines Gewindes auch in das Vollmaterial eines Werkstücks möglich, da der spanabhebende Bereich die Werkstückoberfläche für den Gewindeformbereich durch Materialabtrag aus dem Werkstück selbst herstellt. Es ist also eine Vorbearbeitung des Werkstücks, insbesondere das Vorerzeugen einer Bohrung (Kernlochbohrung) bei einem Innengewinde, nicht notwendig, wenn auch natürlich zusätzlich möglich.

Mit dem erfindungsgemäßen Werkzeug besteht insbesondere die Möglichkeit, dass ein erster spanabhebender Bereich die Werkstückoberfläche, insbesondere die, im Allgemeinen zylindrischen, Wandungsabschnitte des Werkstücks als Innenwandung für ein Innengewinde, durch Materialabtrag vorbereitet, ein zweiter spanabhebender Bereich in diese vom ersten spanabhebenden Bereich vorbereitete Werkstückoberfläche das Vorgewinde einarbeitet und schließlich wenigstens ein Gewindeformbereich das Vorgewinde spanlos nachbearbeitet oder fertig stellt.

Der spanabhebende Bereich zum spanabhebenden Erzeugen der Werkstückoberfläche ist vorzugsweise als Bohrer ausgebildet, insbesondere mit kontinuierlichem Schnitt oder kontinuierlichem Eingriff der Schneide(n) ins Material des Werkstücks.

Analog ist der spanabhebende Bereich zum spanabhebenden Erzeugen des Vorgewindes in einer vorteilhaften Ausführungsform ein Gewindebohrer, arbeitet also insbesondere mit kontinuierlichem Schnitt, oder in einer anderen Ausführungsform ein Gewindefräser, arbeitet also mit unterbrochenem Schnitt.

Das Werkzeug kann nun in einer ersten grundsätzlichen Ausführungsform nur mit der axialen oder linearen Vorschubbewegung in der Vorschubrichtung relativ zum Werkstück bewegt werden.

In dieser Ausführungsform mit ausschließlich axialem Vorschub weist der Gewindeformbereich vorzugsweise eine Gestalt auf, die bei der aus Drehbewegung und Vorschubbewegung zusammengesetzten Bewegung des Gewindeformbereichs sich auf das Gewinde im Werkstück abbildet, insbesondere also eine um die Werkzeugachse spiralförmig oder schraubenförmig (oder: helixförmig) laufende Grundgestalt mit gleicher Steigung wie das erzeugte oder zu erzeugende Gewinde. Dieses Formgebungsgewinde des Gewindeformbereichs am Werkzeug stellt annähernd die Gegenform zu dem zu erzeugenden Gewinde im Werkstück dar und umfasst in der Regel mehrere Gewindegänge. Ein Gewindegang entspricht dabei einem Umlauf bzw. einer Windung der Spirale oder Schraubenlinie um das Werkzeug. Im Längsschnitt bzw. im Gewindeprofil weist der Gewindeformbereich also im Wesentlichen eine Zackenform auf mit sich abwechselnden Zähnen und Rillen. Diese Ausführungsform des Gewindeformbereichs entspricht einem (axialen) Gewindefurchbereich.

Der spanabhebende Bereich kann nun die Werkstückoberfläche oder das Vorgewinde in einem gesonderten Arbeitschritt oder auch simultan mit derselben Arbeitsbewegung wie der Gewindeformbereich erzeugen. Bei einer gesonderten Arbeitsbewegung in einem eigenen Arbeitsschritt kann der spanabhebende Bereich zunächst unabhängig von der Arbeitsbewegung des Gewindeformbereichs beim Gewindeformen axial oder auch zirkular arbeiten. Bei einer einzigen Arbeitsbewegung bewegen sich spanabhebender Bereich und Gewindeformbereich synchron. Beispielsweise kann der spanabhebende Bereich als axialer Bohrbereich eine Bohrung oder Werkstückoberfläche durch eine ausschließlich axiale Vorschubbewegung erzeugen oder als zirkular arbeitender Bohrbereich durch eine zirkulare Vorschubbewegung jeweils unter Drehung des Werkzeugs in dem Schneidsinn des Bohrbereichs.

Grundsätzlich können in einem Kombinationswerkzeug beliebige Arten von spanabhebenden Bereichen mit beliebigen Arten von Gewindeformbereichen kombiniert werden und damit spezielle Werkzeuge für verschiedenste Anwendungsfälle bereitgestellt werden.

In einer Weiterbildung kann auch als zusätzlicher spanabhebender Bereich ein entgegengesetzt zur Vorschubrichtung zum Gewindeformbereich benachbarter spanabhebender Bereich zum Erzeugen eines, insbesondere gegenüber einem Gewindekern, vergrößerten, insbesondere gestuften oder angefasten, Eingangsbereichs oder Mündungsbereich des Gewindes vorgesehen sein.

Als Drückstollen oder Formkeile oder Formzähne werden im Folgenden die Bereiche des Gewindeformbereiches bezeichnet, die wenigstens teilweise in die Werkstückoberfläche eindringen, um das Gewinde auszuformen. Die Drückstollen oder Formkeile nehmen dabei meist in ihrem Querschnitt nach außen ab oder verjüngen sich radial nach außen. Ein Gewindeformbereich kann mehrere Drückstollen bzw. Formkeile umfassen. Die Drück- oder Wirkprofile aufeinander folgender Drückstollen oder Formkeilen können variieren, beispielsweise in den Breiten und/oder Höhen und/oder in Abstufungen sich ändern und sich insbesondere zu einem gemeinsamen oder überlagerten Wirkprofil ergänzen, das sich auf das Gewindeprofil im Werkstück abbildet.

Die Werkzeugachse ist in der Regel eine Längsachse und/oder Hauptträgheitsachse des Werkzeugs und/oder eine zentral durch das Werkzeug verlaufende Achse. Ein Werkzeugschaft des Werkzeugs ist in der Regel im Wesentlichen zylindrisch, also im Querschnitt im Wesentlichen kreisförmig, geformt, und ist an einem Ende in eine Einspannvorrichtung oder einen Werkzeughalter oder ein Werkzeugfutter einer Werkzeugmaschine gehaltert oder eingespannt oder einspannbar. Der Werkzeugschaft kann neben der Kreisform auch beliebige andere Querschnittsformen aufweisen. Der Werkzeugschaft kann entlang der Werkzeugachse einen sich vergrößernden oder verkleinernden und/oder einen sich in seiner Form verändernden Querschnitt aufweisen.

Spanabhebende(r) Bereich(e) und/oder Gewindeformbereich(e) können einstückig mit dem Werkzeugschaft ausgebildet sein oder auch als vorgefertigte(s) Teil(e) mit diesem verbunden sein, beispielsweise aufgeschrumpft oder aufgelötet oder aufgeschweißt oder aufgeklebt oder aufgeschraubt werden. Ferner können zusätzliche Verschleißschutzschichten auf das Werkzeug oder dessen Arbeitsbereichen aufgebracht werden. Besonders vorteilhaft ist es, wenn der Werkzeugschaft und Schneidteil aus einem Werkzeugstahl, insbesondere einem Schnellarbeitsstahl gefertigt ist. Das kann beispielsweise eine Hochleistungsschnellstahl (HSS-Stahl) oder ein cobaltlegierter Hochleistungsschnellstahl (HSS-E-Stahl) sein. Die Arbeitsbereiche sind vorzugsweise aus HSS, HSS-E, HSS-E-PM, Hartmetall oder aus einer Hartmetalllegierung, insbesondere P-Sorte oder K-Sorte oder Cermet, oder aus Sinterhartmetall, insbesondere aus Wolframkarbid oder Titannitrid oder Titankarbid oder Titankarbonitrid oder Aluminiumoxid, oder aus einer Schneidkeramik, insbesondere polykristallines Bornitrid (PKB) oder aus polykristallinem Diamant (PKD), insbesondere als Beschichtung oder z. B. aufgelötete Leisten, gefertigt.

Wenigstens ein Gewindeformbereich weist in einer besonderen Ausführungsform vorzugsweise zumindest in einem Teilbereich einen entgegen der Vorschubrichtung, vorzugsweise konisch oder linear, zunehmenden Außendurchmesser auf. Dass sich der Gewindeformbereich in Vorschubrichtung verjüngt, hat zum Beispiel den Vorteil, dass das Eindringen der ersten Drückstollen in die Werkstückoberfläche bzw. die Innenwand der Bohrung erleichtert wird. Vorteilhaft kann es auch sein, wenn wenigstens ein Gewindeformbereich einen entgegen einer Vorschubrichtung gleichbleibenden Außendurchmesser aufweist.

Besonders bevorzugt ist es, wenn wenigstens ein Gewindeformbereich entgegen der Vorschubrichtung einen Bereich mit zunehmendem Außendurchmesser, auch als Formgebungsbereich oder Anfurchbereich bezeichnet, und anschließend einen Bereich mit gleichbleibendem Außendurchmesser, auch als Führungsbereich oder Kalibrierbereich bezeichnet, aufweist. Der Führungsbereich dient vornehmlich zur Führung des Werkzeugs in dem Gewinde, so dass die für die Gewindeerzeugung bereitgestellte Kraft im Formgebungsbereich gleichmäßig und dadurch möglichst verlustfrei auf die Oberfläche des Werkstücks übertragen wird. Gleichzeitig kann der Führungsbereich die Funktion haben, die erzeugte Gewindeoberfläche bzw. die Gewindeflanken zu glätten und zu kalibrieren. Dadurch kann das Gewinde sehr genau gefertigt werden. Auch der spanabhebende Bereich kann analog einen Anschnittbereich und einen daran entgegen der Vorschubrichtung des Werkzeugs angrenzenden Vollschneidbereich aufweisen.

In einer besonders vorteilhaften Ausführungsform sind am Umfang wenigstens eines Gewindeformbereichs und/oder wenigstens eines spanabhebenden Bereichs eine oder mehrere Nuten und/oder Durchbrechnungen und/oder im Werkzeug Kanäle vorgesehen zur Führung eines fluiden Mediums, insbesondere eines Kühl- und/oder Schmiermittels und/oder Luft wie Druckluft oder Kaltluft, um die Reibung und/oder die Wärmeentwicklung zu reduzieren und die entstehende Wärme abzuführen. Die Nuten und/oder Durchbrechungen und/oder Kanäle können gerade und/oder parallel oder axial zur Werkzeugachse und/oder oder schräg zur Werkzeugachse und/oder in Längsrichtung des Werkzeugs verlaufen oder auch um die Werkzeugachse gedrallt oder schraubenförmig (Drallnuten), also verdrillt bzw. mit einer Drehung um den Umfang des Werkzeugs oder de Werkzeugachse, ausgebildet sein.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Es zeigen
- FIG 1: in perspektivischer Darstellung ein Ausführungsbeispiel eines Werkzeugs nach der Erfindung, und
- FIG 2: in einem Längsschnitt einen Teil des Arbeitskopfes des Werkzeugs nach FIG 1.

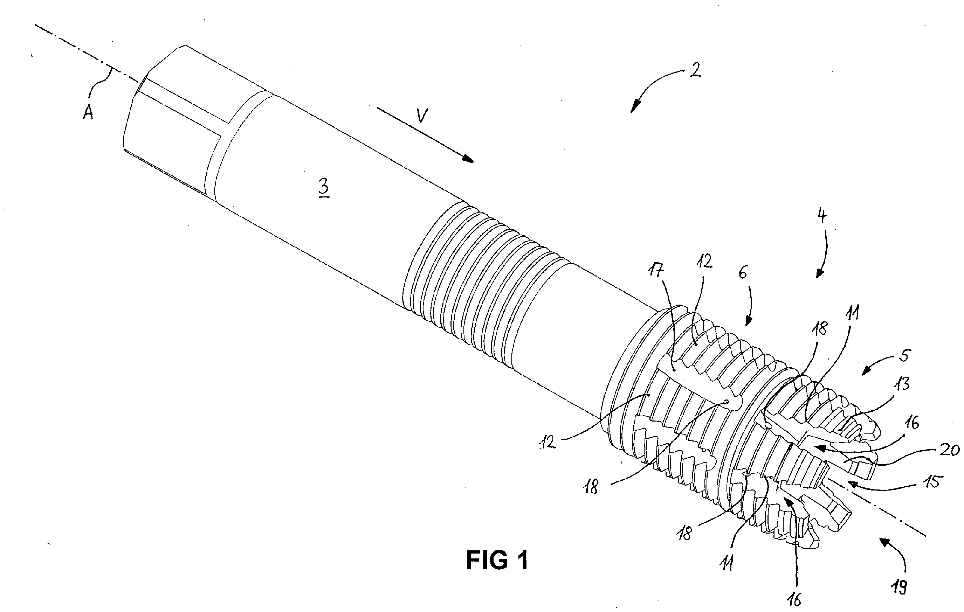

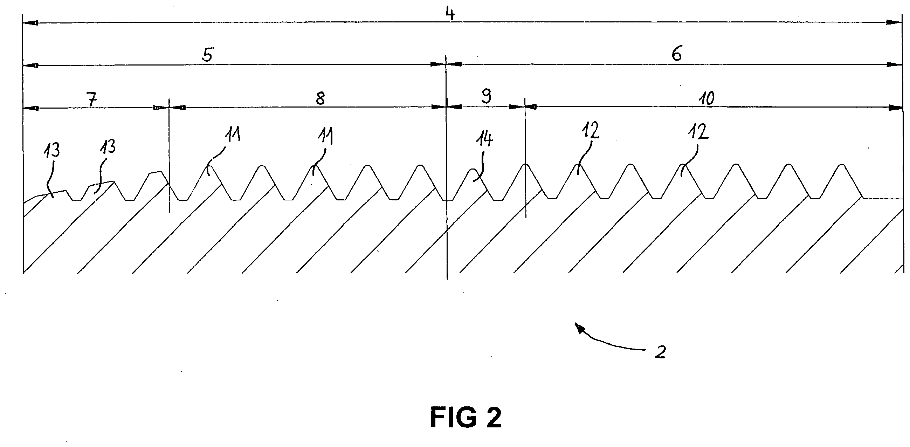

Einander entsprechende Teile und Größen sind in FIG 1 und FIG 2 mit den gleichen Bezugszeichen versehen.

FIG 1 zeigt in perspektivischer Darstellung ein Ausführungsbeispiel eines Werkzeugs 2 nach der Erfindung, mit einem Werkzeugschaft 3, einem an dem Werkzeugschaft 3 angeordneten Arbeitskopf 4, einer Werkzeuglängsachse A und einer vorgesehenen Vorschubrichtung V für eine Werkstückbearbeitung. FIG 2 zeigt in einem Längsschnitt einen Teil des Arbeitskopfes 4 des in FIG 1 dargestellten Werkzeugs 2.

Der Arbeitskopf 4 des Werkzeugs 2 kann fest an oder mit dem Schaft 3 verbunden ausgebildet sein, insbesondere einstückig mit dem Schaft 3. Es ist aber ebenso möglich, den Arbeitskopf 4 lösbar mit dem Schaft 4 zu verbinden, beispielsweise indem der Arbeitskopf 4 als abnehmbares und damit austauschbares Aufsteckteil ausgebildet ist.

Bei dem Werkzeug 2 handelt es sich um ein Kombinationswerkzeug, und zwar um ein kombiniertes Gewinde-schneid-form-werkzeug. Der Arbeitskopf 4 umfasst einen spanabhebenden (oder: spanenden) Bereich 5, der auch als Schneidteil bezeichnet werden kann, und einen Gewindeformbereich 6, der auch als Furchteil bezeichnet werden kann. Spanabhebender Bereich 5 und Gewindeformteil 6 sind beide um die Werkzeugachse A drehbar.

Der spanabhebende Bereich 5 grenzt an das in Vorschubrichtung V des Werkzeugs 2 vordere, stirnseitige (freien) Werkzeugende 19 an, der Gewindeformbereich 6 schließt hieran entgegen der Vorschubrichtung V an.

Im spanabhebenden Bereich 5 sind als schneidende Elemente zahlreiche Schneiden 11, 13 (auch: Schneidzähne) angeordnet. Der spanabhebende Bereich 5 ist unterteilt in einen an das stirnseitige Werkzeugende 19 angrenzenden Anschnittbereich 7, hier einen Anschnittkegel 7, und einen daran entgegen der Vorschubrichtung V des Werkzeugs 2 angrenzenden Vollschneidbereich 8. Im Anschnittbereich 7 sind die Schneidzähne als Vorschneidzähne 13 mit geringerer radialer Erstreckung als die normalen Schneiden 11 ausgebildet, wobei der Außenradius (maximale radialer Abstand von der Werkzeugachse) der Vorschnneidzähne 13 entgegen der Vorschubrichtung V des Werkzeugs 2 zunimmt.

Im Gewindeformbereich 6 sind als formende Elemente zahlreiche Drückstollen 12, 14 (oder: Formkeile, Furchzähne) vorgesehen. Der Gewindeformbereich 6 ist unterteilt in einen an den spanabhebenden Bereich 5 entgegen der Vorschubrichtung V des Werkzeugs 2 angrenzenden Anfurchbereich 9, hier ein Anfurchkegel 9, und einen daran entgegen der Vorschubrichtung V angrenzenden Vollfurchbereich 10 (oder: Führungsbereich). Im Anlaufbereich 9 sind die Drückstollen als Vorfurchzähne 14 mit geringerer radialer Erstreckung als de normalen Drückstollen 12 ausgebildet. Der Außenradius (maximale radialer Abstand von der Werkzeugachse) der normalen Drückstollen 12 ist etwas größer als der Außenradius der Schneidzähne 11 im spanabhebenden Bereich 5.

Das Werkzeug 2 weist an seinem stirnseitigen Werkzeugende 19 eine Stirnaussparung 15 (oder: Stirnausnehmung) auf. Diese ist ausgebildet und bestimmt für die Aufnahme von Spänen, die bei der schneidenden Werkstückbearbeitung mit den Schneiden 11, 13 des spanabhebenden Bereichs 5 entstehen. Dadurch wird zumindest weitestgehend verhindert, dass Späne in den Gewindeformbereich 6 gelangen und dort von den Drückstollen 12, 14 in das in dem Werkstück erzeugte bzw. zu erzeugende Gewinde gedrückt werden und dadurch eine ordnungsgemäße Gewindeausbildung behindern bzw. verhindern.

Die Stirnaussparung 15 erstreckt sich ausgehend vom stirnseitigen Werkzeugende 19 entlang der Werkzeugachse A entgegen der Vorschubrichtung V des Werkzeugs 2 in das Werkzeug 2 hinein. Die Querschnittsfläche der Stirnaussparung 15 senkrecht zur Werkzeugachse A nimmt mit zunehmendem Abstand vom stirnseitigen Werkzeugende 19 ab. Die Form der Stirnaussparung 15 ist im Wesentlichen annähernd kegelstumpfförmig. Die Stirnaussparung 15 erstreckt sich über den Anschnittkegel 7 hinaus in das Werkzeug 2 hinein.

Die Stirnaussparung 15 ist in der Mitte des stirnseitigen Werkzeugendes 19 ausgebildet und radial von einem Mantel 20 umgeben. An diesem Mantel 20 ist radial außen der spanabhebende Bereich 5 angeordnet. Der Mantel 20 weist mehrere Durchbrechungen 16 auf, die den Eintritt von Spänen in die Stirnaussparung 15 ausgehend von den Schneiden 11, 13 ermöglichen. Die Durchbrechungen 16 gehen jeweils den Schneiden 11, 13 des spanabhebenden Bereichs 5 in deren Schnittrichtung voraus. Die Durchbrechungen 16 erstrecken sich ausgehend vom stirnseitigen Werkzeugende 19 im Wesentlichen geradlinig entlang des Werkzeugs 2, parallel zur Werkzeugachse A.

Die Durchbrechungen 16 entsprechen in Ihrer Funktion weitestgehend den Nuten in herkömmlichen spanabhebenden Werkzeugen. Hauptaufgabe ist jeweils die Spanabfuhr. Die Nuten transportieren den Span entgegen einer Vorschubrichtung V des jeweiligen Werkzeugs in den hinteren Bereich des Werkzeugs, die Durchbrechungen 16 hingegen bringen den Span in die für die Spanaufnahme eingerichtete Stirnaussparung 15.

In den Durchbrechungen 16 sind Austrittsöffnungen 18 einer inneren Kühlmittelzufuhr angeordnet. Über diese Austrittsöffnungen 18 und die Durchbrechungen 16 kann Kühlmittel an die Schneiden 11, 13 geleitet werden.

Im Gewindeformbereich 6 sind Nuten 17 ausgebildet, in denen ebenfalls Austrittsöffnungen 18 der inneren Kühlmittelzufuhr angeordnet sind. Über diese Austrittsöffnungen 18 und die Nuten 17 wird Kühlmittel zu den Drückstollen 12, 14 transportiert.

### Bezugszeichenliste

- 2: Werkzeug
- 3: Schaft, Werkzeugschaft
- 4: Arbeitskopf
- 5: spanabhebender Bereich, Schneidteil
- 6: Gewindeformbereich, Furchteil
- 7: Anschnittkegel, Anschnittbereich
- 8: Vollschneidbereich
- 9: Anfurchkegel, Anfurchbereich
- 10: Vollfurchbereich, Führungsbereich
- 11: Schneide, Schneidzahn
- 12: Drückstollen, Formkeil, Furchzahn
- 13: Vorschneidzahn
- 14: Vorfurchzahn
- 15: Stirnaussparung, Stirnausnehmung
- 16: Durchbrechungen
- 17: Nut
- 18: Austrittsöffnung einer inneren Kühlmittelzufuhr
- 19: stirnseitiges Werkzeugende, freies Ende
- 20: Mantel

- A: Werkzeugachse, Werkzeuglängsachse
- V: Vorschubrichtung

## Patentansprüche

1. Werkzeug (2) zur Erzeugung eines Gewindes, insbesondere eines Innengewindes, umfassend
a) wenigstens einen spanabhebenden Bereich (5) mit wenigstens einer Schneide (11, 13),
a1) wobei der wenigstens eine spanabhebende Bereich (5) zum Erzeugen einer Werkstückoberfläche für das Gewinde und/oder zum spanenden Erzeugen eines Vorgewindes in der bzw. einer Werkstückoberfläche ausgebildet und/oder vorgesehen ist,
b) wenigstens einen Gewindeformbereich (6),
b1) wobei der wenigstens eine Gewindeformbereich (6) zum spanlosen Erzeugen des Gewindes oder zum spanlosen Nach- oder Fertigbearbeiten des Vorgewindes jeweils durch Eindrücken oder Einformen in die Werkstückoberfläche ausgebildet und/oder vorgesehen ist,
c) bei dem der bzw. die spanabhebende(n) Bereich(e) (5) und der bzw. die Gewindeformbereich(e) (6) so miteinander gekoppelt oder verbunden sind, dass sie gemeinsam um eine Werkzeugachse (A) drehbar oder drehend sind,
d) bei dem mindestens ein spanabhebender Bereich (5) wenigstens teilweise an einem stirnseitigen Werkzeugende (19) und/oder angrenzend an ein stirnseitiges Werkzeugende (19) ausgebildet ist, **dadurch gekennzeichnet, dass**
e) am stirnseitigen Werkzeugende (19) eine Stirnaussparung (15) ausgebildet ist, die für die Aufnahme von Spänen bestimmt ist,
f) dass die Querschnittsfläche der Stirnaussparung (15) mit zunehmendem Abstand vom stirnseitigen Werkzeugende (19) abnimmt, und
g) dass das Werkzeug als Werkzeug mit Nuten (17) und/oder Kanälen und/oder Durchbrechungen (16) zur Führung der abgehobenen Späne ausgebildet ist, wobei die Nuten (17) und/oder Kanäle und/oder Durchbrechungen (16) im spanabhebenden Bereich (5) und/oder im Gewindeformbereich (6) verlaufen und/oder münden.

2. Werkzeug nach Anspruch 1, bei dem die Stirnaussparung (15) sich ausgehend vom stirnseitigen Werkzeugende (19) entlang der Werkzeugachse (A) in das Werkzeug (2) hinein erstreckt, und/oder bei dem die Stirnaussparung (15) sich ausgehend vom stirnseitigen Werkzeugende (19) im Wesentlichen kegelstumpfförmig oder zylinderförmig in das Werkzeug (2) hinein erstreckt.

3. Werkzeug nach einem der vorhergehenden Ansprüche, bei dem die Querschnittsfläche der Stirnaussparung (15) senkrecht zur Werkzeugachse (A) zumindest am stirnseitigen Werkzeugende (19) mindestens 30 Prozent der Werkzeugquerschnittsfläche einnimmt, insbesondere mindestens 50 Prozent, vorzugsweise mindestens 70 Prozent, und/oder bei dem die Stirnaussparung (15) sich tiefer als eine an das stirnseitige Werkzeugende (19) angrenzende Schneide (13) und/oder Schneidenreihe des spanabhebenden Bereichs (5) in das Werkzeug (2) hinein erstreckt, insbesondere tiefer als die halbe Länge des an das stirnseitige Werkzeugende (19) angrenzenden spanabhebenden Bereichs (5).

4. Werkzeug nach einem der vorhergehenden Ansprüche, bei dem die Stirnaussparung (15) in der Mitte des stirnseitigen Werkzeugendes (19) ausgebildet und/oder radial von einem Mantel (20) umgeben ist.

5. Werkzeug nach Anspruch 4, bei dem der die Stirnaussparung (15) radial umgebende Mantel (20) eine oder mehrere Durchbrechungen (16) aufweist, die den Eintritt von Spänen in die Stirnaussparung (15) ermöglichen.

6. Werkzeug nach Anspruch 5, bei dem die Durchbrechungen (16) den Schneiden (11, 13) des spanabhebenden Bereichs (5) in deren Schnittrichtung vorausgehen, und/oder bei dem die Durchbrechungen (16) sich ausgehend vom stirnseitigen Werkzeugende (19) entlang des Werkzeugs (2) erstrecken, und/oder bei dem sich die Durchbrechungen (16) parallel zur Schneidenanordnung längs des Werkzeugs (2) erstrecken, und/oder bei dem sich die Durchbrechungen (16) geradlinig, insbesondere parallel zur Werkzeugachse (A), vorzugsweise schräg und/oder spiralförmig um die Werkzeugachse (A) gewunden erstrecken.

7. Werkzeug nach einem der vorhergehenden Ansprüchen, bei dem wenigstens ein spanabhebender Bereich (5) oder die Anordnung von dessen wenigstens einer Schneide (11, 13) für einen vorgegebenen Drehsinn (im Uhrzeigersinn oder entgegen dem Uhrzeigersinn) um die Werkzeugachse (A) ausgelegt ist und der wenigstens eine Gewindeformbereich (6) so ausgebildet und angeordnet ist, dass er bei diesem Drehsinn das Gewinde erzeugt bzw. das Vorgewinde nachbearbeitet, und/oder bei dem wenigstens ein spanabhebender Bereich (5) oder die Anordnung von dessen wenigstens einer Schneide (11, 13) für eine vorgegebene Vorschubrichtung (V) des Werkzeugs (2), insbesondere eine vom Werkzeug (2) aus gesehen zu dem axial zur Werkzeugachse (A) angeordneten stirnseitigen Ende (19) des Werkzeugs (2) hin gerichtete Vorschubsrichtung (V), axial zur Werkzeugachse (A) ausgelegt ist und der wenigstens eine Gewindeformbereich (6) so ausgebildet und angeordnet ist, dass er bei dieser Vorschubrichtung (V) das Gewinde erzeugt bzw. das Vorgewinde nachbearbeitet, und/oder bei dem wenigstens ein spanabhebender Bereich ein Bohrbereich ist und/oder wenigstens ein Gewindeformbereich ein ausschließlich mittels Drehbewegung um die Werkzeugachse und axialer Vorschubbewegung parallel zur Werkzeugachse arbeitender Gewindefurchbereich ist, und/oder bei dem wenigstens ein spanabhebender Bereich wenigstens eine stirnseitige Schneide oder Fase am stirnseitigen Werkzeugende und/oder wenigstens eine umfangsseitige Schneide an einem Umfangsbereich des Werkzeugs aufweist, und/oder bei dem wenigstens ein spanabhebender Bereich (5) und wenigstens ein Gewindeformbereich (6) axial zur Werkzeugachse (A) hintereinander angeordnet sind.

8. Werkzeug nach einem der vorhergehenden Ansprüche, ausgebildet als Werkzeug, das ausschließlich mittels Drehbewegung um die Werkzeugachse und axialer Vorschubbewegung parallel zur Werkzeugachse arbeitet, und/oder ausgebildet als Werkzeug mit Nuten (17) und/oder Kanälen und/oder Durchbrechungen (16) zur Führung eines fluiden Mediums, insbesondere eines Kühl- und/oder Schmiermittels und/oder Luft wie Druckluft und/oder Kaltluft, wobei die Nuten (17) und/oder Kanäle und/oder Durchbrechungen (16) vorzugsweise am Umfang des Werkzeugs (2) und/oder im Innern des Werkzeugs (2) verlaufen und/oder münden, insbesondere zumindest mit einer Hauptrichtung parallel zur Werkzeugachse (A) und/oder gerade oder gedrallt oder schraubenförmig um die Werkzeugachse (A) und/oder in Längsrichtung des Werkzeugs (2).

9. Werkzeug nach einem der vorhergehenden Ansprüche, bei dem der oder jeder Gewindeformbereich (6) und der oder jeder spanabhebende Bereich (5) an einem gemeinsamen Werkzeugschaft (3) oder einem gemeinsamen Werkzeugkern ausgebildet oder angebracht sind, wobei der Werkzeugschaft (3) vorzugsweise zum Haltern oder Einspannen des Werkzeugs (2) in einem Werkzeughalter oder Werkzeugfutter vorgesehen ist.

10. Werkzeug nach einem der vorhergehenden Ansprüche, bei dem wenigstens ein Gewindeformbereich (6) wenigstens einen radial nach außen ragenden Drückstollen (12, 14) oder Formkeil (12, 14), insbesondere mehrere entlang einer die Werkzeugachse (A) umlaufenden Kurve, vorzugsweise einer die Werkzeugachse (A) spiralförmig oder schraubenförmig umlaufenden Kurve, angeordnete Drückstollen (12, 14) oder Formkeile (12, 14), aufweist.

11. Werkzeug nach einem der vorhergehenden Ansprüche, bei dem der radiale Abstand von der Werkzeugachse (A) oder die radialen Außenmaße oder -abmessungen wenigstens eines Gewindeformbereichs (6) oder axial zur Werkzeugachse aufeinanderfolgender Drückstollen (14) entgegen einer Vorschubrichtung (V) des Werkzeugs (2) in einem Teilbereich oder Anfurchbereich (9) zunimmt und/oder in wenigstens einem Führungsbereich (10) gleich bleibt.

## Claims

1. Tool (2) for producing a thread, in particular an internal thread, comprising
a) at least one cutting region (5) having at least one cutting edge (11, 13),
a1) wherein the at least one cutting region (5) is formed and/or provided for producing a workpiece surface for the thread and/or for the cutting production of a pre-thread in the or a workpiece surface,
b) at least one thread-forming region (6),
b1) wherein the at least one thread-forming region (6) is formed and/or provided for the chipless production of the thread or for the chipless rework or finish processing of the pre-thread by the respective thread or pre-thread being pressed into or formed in the workpiece surface,
c) in which the cutting region(s) (5) and the thread-forming region(s) (6) are coupled or connected to one another in such a way that they are rotatable or rotate together about a tool axis (A),
d) in which at least one cutting region (5) is at least partly formed on a front-face tool end (19) and/or adjacent to a front-face tool end (19), **characterized in that**
e) a front-face recess (15) which is intended for receiving chips is formed on the front-face tool end (19).
f) **in that** the cross-sectional area of the front-face recess (15) decreases with increasing distance from the front-face tool end (19), and
g) **in that** the tool is designed as a tool having grooves (17) and/or passages and/or apertures (16) for directing the removed chips, the grooves (17) and/or passages and/or apertures (16) running and/or opening out in the cutting region (5) and/or in the thread-forming region (6).

2. Tool according to Claim 1, in which the front-face recess (15), starting from the front-face tool end (19), extends along the tool axis (A) into the tool (2), and/or in which the front-face recess (15), starting from the front-face tool end (18), extends essentially frustoconically or cylindrically into the tool (2).

3. Tool according to either of the preceding claims, in which the cross-sectional area of the front-face recess (15) perpendicularly to the tool axis (A), at least at the front-face tool end (19), takes up at least 30 percent of the tool cross-sectional area, in particular at least 50 percent, preferably at least 70 percent, and/or in which the front-face recess (15) extends deeper into the tool (2) than a cutting edge (13) and/or a cutting-edge row, adjoining the front-face tool end (19), of the cutting region (5), in particular deeper than half the length of the cutting region (5) adjoining the front-face tool end (19).

4. Tool according to one of the preceding claims, in which the front-face recess (15) is formed in the center of the front-face tool end (19) and/or is surrounded radially by a shell (20).

5. Tool according to Claim 4, in which the shell (20) radially surrounding the front-face recess (15) has one or more apertures (16) which enable chips to enter the front-face recess (15).

6. Tool according to Claim 5, in which the apertures (16) precede the cutting edges (11, 13) of the cutting region (5) in their cutting direction, and/or in which the apertures (16), starting from the front-face tool end (19), extend along the tool (2), and/or in which the apertures (16) extend parallel to the cutting-edge arrangement along the tool (2), and/or in which the apertures (16) extend rectilinearly, in particular parallel to the tool axis (A), preferably obliquely and/or spirally wound about the tool axis (A).

7. Tool according to one of the preceding claims, in which at least one cutting region (5) or the arrangement of its at least one cutting edge (11, 13) is designed for a predetermined direction of rotation (clockwise or counterclockwise) about the tool axis (A), and the at least one thread-forming region (6) is designed and arranged in such a way that it produces the thread or reworks the pre-thread with this direction of rotation, and/or in which at least one cutting region (5) or the arrangement of its at least one cutting edge (11, 13) is designed for a predetermined feed direction (V) of the tool (2) axially relative to the tool axis (A), in particular a feed direction (V) directed, as viewed from the tool (2), toward the front-face end (19), arranged axially relative to the tool axis (A), of the tool (2), and the at least one thread-forming region (6) is designed and arranged in such a way that it produces the thread or reworks the pre-thread with this feed direction (V), and/or in which at least one cutting region is a drilling region, and/or at least one thread-forming region is a thread-forming region working exclusively by means of a rotary movement about the tool axis and an axial feed movement parallel to the tool axis, and/or in which at least one cutting region has at least one front-face cutting edge or chamfer on the front-face tool end and/or at least one circumferential cutting edge on a circumferential region of the tool, and/or in which at least one cutting region (5) and at least one thread-forming region (6) are arranged one behind the other axially relative to the tool axis (A).

8. Tool according to one of the preceding claims, designed as a tool which works exclusively by means of a rotary movement about the tool axis and an axial feed movement parallel to the tool axis, and/or designed as a tool having grooves (17) and/or passages and/or apertures (16) for directing a fluid medium, in particular a coolant and/or lubricant and/or air, such as compressed air and/or cold air, the grooves (17) and/or passages and/or apertures (16) preferably running and/or opening out at the circumference of the tool (2) and/or in the interior of the tool (2), in particular at least with a main direction parallel to the tool axis (A) and/or rectilinearly or in a twisted manner or helically about the tool axis (A) and/or in the longitudinal direction of the tool (2).

9. Tool according to one of the preceding claims, in which the or each thread-forming region (6) and the or each cutting region (5) is formed on or attached to a common tool shank (3) or a common tool core, the tool shank (3) preferably being provided for holding or clamping the tool (2) in a tool holder or tool chuck.

10. Tool according to one of the preceding claims, in which at least one thread-forming region (6) has at least one pressing lobe (12, 14) or forming wedge (12, 14) projecting radially outward, in particular a plurality of pressing lobes (12, 14) or forming wedges (12, 14) arranged along a curve encircling the tool axis (A), preferably a curve encircling the tool axis (A) spirally or helically.

11. Tool according to one of the preceding claims, in which the radial distance from the tool axis (A) or the radial outer dimensions of at least one thread-forming region (6) or of pressing lobes (14) following one another axially relative to the tool axis increases or increase against a feed direction (V) of the tool (2) in a section or initial-forming region (9) and/or is or are uniform in at least one guide region (10).

## Revendications

1. Outil (2) pour la réalisation d'un filetage, en particulier d'un filetage interne, comprenant
a) au moins une région d'enlèvement de copeaux (5) avec au moins un tranchant (11, 13),
a1) l'au moins une région d'enlèvement de copeaux (5) étant réalisée et/ou prévue pour réaliser une surface de pièce pour le filetage et/ou pour réaliser par enlèvement de copeaux un pré-filetage dans la ou dans une surface de pièce,
b) au moins une région de formation de filetage (6),
b1) l'au moins une région de formation de filetage (6) étant réalisée et/ou prévue pour réaliser le filetage sans enlèvement de copeaux ou pour réaliser un post-usinage ou un usinage de finition sans enlèvement de copeaux du pré-filetage à chaque fois par impression ou formage dans la surface de la pièce,
c) dans lequel la ou les régions d'enlèvement de copeaux (5) et la ou les régions de formation de filetage (6) sont accouplées ou connectées l'une à l'autre de telle sorte qu'elles puissent tourner ou qu'elles tournent en commun autour d'un axe d'outil (A),
d) dans lequel au moins une région d'enlèvement de copeaux (5) est réalisée au moins en partie au niveau d'une extrémité d'outil frontale (19) et/ou en position adjacente à une extrémité d'outil frontale (19),
**caractérisé en ce que**
e) un évidement frontal (15) est réalisé au niveau de l'extrémité d'outil frontale (19), lequel est prévu pour recevoir des copeaux,
f) la surface en section transversale de l'évidement frontal (15) diminue au fur et à mesure de l'augmentation de la distance à l'extrémité d'outil frontale (19), et
g) l'outil est réalisé sous forme d'outil avec des rainures (17) et/ou des canaux et/ou des interruptions (16) pour guider les copeaux retirés, les rainures (17) et/ou les canaux et/ou les interruptions (16) s'étendant et/ou débouchant dans la région d'enlèvement de copeaux (5) et/ou dans la région de formation de filetage (6).

2. Outil selon la revendication 1, dans lequel l'évidement frontal (15) s'étend à partir de l'extrémité d'outil frontale (19) le long de l'axe d'outil (A) dans l'outil (2), et/ou dans lequel l'évidement frontal (15) s'étend depuis l'extrémité d'outil frontale (19) essentiellement sous forme tronconique ou cylindrique dans l'outil (2).

3. Outil selon l'une quelconque des revendications précédentes, dans lequel la surface en section transversale de l'évidement frontal (15), perpendiculairement à l'axe d'outil (A), occupe au moins au niveau de l'extrémité d'outil frontale (19), au moins 30 % de la surface en section transversale de l'outil, en particulier au moins 50 %, de préférence au moins 70 % et/ou dans lequel l'évidement frontal (15) s'étend plus profondément qu'un tranchant (13) adjacent à l'extrémité d'outil frontale (19) et/ou que la rangée de tranchants de la région d'enlèvement de copeaux (5) dans l'outil (2), en particulier s'étend plus profondément que la moitié de la longueur de la région d'enlèvement de copeaux (5) adjacente à l'extrémité d'outil frontale (19).

4. Outil selon l'une quelconque des revendications précédentes, dans lequel l'évidement frontal (15) est réalisé au centre de l'extrémité d'outil frontale (19) et/ou est entouré radialement par une enveloppe (20).

5. Outil selon la revendication 4, dans lequel l'enveloppe (20) entourant radialement l'évidement frontal (15) présente une ou plusieurs interruptions (16) qui permettent l'entrée de copeaux dans l'évidement frontal (15).

6. Outil selon la revendication 5, dans lequel les interruptions (16) précèdent les tranchants (11, 13) de la région d'enlèvement de copeaux (5) dans leur sens de coupe et/ou dans lequel les interruptions (16) s'étendent à partir de l'extrémité d'outil frontale (19) le long de l'outil (2), et/ou dans lequel les interruptions (16) s'étendent parallèlement à l'agencement de tranchants le long de l'outil (2), et/ou dans lequel les interruptions (16) s'étendent en ligne droite, en particulier parallèlement à l'axe d'outil (A), de préférence obliquement et/ou en spirale sous forme enroulée autour de l'axe d'outil (A).

7. Outil selon l'une quelconque des revendications précédentes, dans lequel au moins une région d'enlèvement de copeaux (5) ou l'agencement de son ou de ses tranchants (11, 13) est conçu(e) pour un sens de rotation prédéfini (dans le sens des aiguilles d'une montre ou dans le sens inverse) autour de l'axe d'outil (A) et l'au moins une région de formage de filetage (6) est réalisée et disposée de telle sorte qu'elle réalise le filetage dans ce sens de rotation ou qu'elle réalise le post-traitement du pré-filetage, et/ou dans lequel au moins une région d'enlèvement de copeaux (5) ou l'agencement de son ou de ses tranchants (11, 13) est conçu(e), axialement par rapport à l'axe d'outil (A), pour un sens d'avance prédéfini (V) de l'outil (2), en particulier un sens d'avance (V), vu depuis l'outil (2), orienté vers l'extrémité frontale (19) de l'outil (2) disposée axialement par rapport à l'axe d'outil (A) et l'au moins une région de formage de filetage (6) est réalisée et disposée de telle sorte que dans ce sens d'avance (V), elle réalise le filetage ou elle réalise le post-usinage du pré-filetage et/ou dans lequel au moins une région d'enlèvement de copeaux est une région de perçage et/ou au moins une région de formage de filetage est une région de rainurage de filetage travaillant exclusivement au moyen d'un sens de rotation autour de l'axe d'outil et d'un déplacement d'avance axial parallèlement à l'axe d'outil, et/ou dans lequel au moins une région d'enlèvement de copeaux présente au moins un tranchant frontal ou un biseau au niveau de l'extrémité d'outil frontale et/ou au moins un tranchant du côté périphérique au niveau d'une région périphérique de l'outil, et/ou dans lequel au moins une région d'enlèvement de copeaux (5) et au moins une région de formation de filetage (6) sont disposées l'une derrière l'autre axialement par rapport à l'axe d'outil (A).

8. Outil selon l'une quelconque des revendications précédentes, réalisé en tant qu'outil qui travaille exclusivement au moyen d'un mouvement de rotation autour de l'axe de d'outil et d'un déplacement d'avance axial parallèlement à l'axe d'outil, et/ou réalisé en tant qu'outil avec des rainures (17) et/ou des canaux et/ou des interruptions (16) pour le guidage d'un milieu fluide, en particulier d'un réfrigérant et/ou d'un lubrifiant et/ou de l'air tel que de l'air comprimé et/ou de l'air froid, les rainures (17) et/ou les canaux et/ou les interruptions (16) s'étendant et/ou débouchant de préférence au niveau de la périphérie de l'outil (2) et/ou à l'intérieur de l'outil (2), en particulier au moins avec une direction principale parallèle à l'axe d'outil (A) et/ou rectiligne ou tordue ou hélicoïdale autour de l'axe d'outil (A) et/ou dans la direction longitudinale de l'outil (2).

9. Outil selon l'une quelconque des revendications précédentes, dans lequel la ou chaque région de formage de filetage (6) et la ou chaque région d'enlèvement de copeaux (5) sont réalisées ou montées au niveau d'un arbre d'outil commun (3) ou d'un noyau d'outil commun, l'arbre d'outil (3) étant de préférence prévu pour retenir ou serrer l'outil (2) dans un porte-outil ou dans un mandrin d'outil.

10. Outil selon l'une quelconque des revendications précédentes, dans lequel au moins une région de formage de filetage (6) présente au moins un crampon de pression (12, 14) ou une clavette de formage (12, 14) saillant radialement vers l'extérieur, en particulier plusieurs crampons de pression (12, 14) ou clavettes de formage (12, 14) disposés le long d'une courbe s'étendant autour de l'axe d'outil (A), de préférence d'une courbe s'étendant en spirale ou sous forme hélicoïdale autour de l'axe d'outil (A).

11. Outil selon l'une quelconque des revendications précédentes, dans lequel la distance radiale à l'axe d'outil (A) ou les mesures ou dimensions extérieures radiales d'au moins une région de formage de filetage (6) ou de crampons de pression successifs (14) axialement par rapport à l'axe d'outil, augmentent dans une région partielle ou une région de rainurage (9) et/ou restent identiques dans au moins une région de guidage (10), dans un sens opposé au sens d'avance (V) de l'outil (2).
